# EUROPÄISCHE PATENTSCHRIFT

(11) **EP 2 096 737 B1**
(45) Veröffentlichungstag und Bekanntmachung des Hinweises auf die Patenterteilung: **11.09.2013**
(21) Anmeldenummer: 08003849.0
(22) Anmeldetag: 29.02.2008
(51) Int. Cl.: H02K 5/167, F04D 13/06, F16C 23/04, F16C 25/02, H02K 5/128

(54) **Tauchmotor**
Submersible motor
Moteur submersible

(43) Veröffentlichungstag der Anmeldung: 02.09.2009
(73) Patentinhaber: Grundfos Management A/S, 8850 Bjerringbro (DK)
(72) Erfinder: Appel, Kjeld, 8600 Silkeborg (DK)
(74) Vertreter: Hemmer, Arnd

(56) Entgegenhaltungen:
- EP-A- 1 645 761
- WO-A-98/32980
- US-A- 3 912 343
- US-A- 5 725 431

## Beschreibung

Die Erfindung betrifft einen Tauchmotor zum Antrieb einer Tauchpumpe.

Derartige Tauchmotoren sind als Elektromotoren ausgebildet und weisen einen Rotor mit einer Rotorwelle auf, welche sowohl in radialer als auch in axialer Richtung in dem Motorgehäuse gelagert werden müssen. Beim Antrieb einer Pumpe, insbesondere eines Kreiselpumpenaggregates, treten im Betrieb hauptsächlich Axialkräfte in einer definierten Axialrichtung auf. In dieser Richtung wird das Hauptaxiallager angeordnet, um die Axialkräfte, welche auf die Rotorwelle bzw. den Rotor wirken aufzunehmen.

Um eine selbsttätige exakte Ausrichtung der Axiallagerflächen in einer Ebene normal zur Drehachse zu ermöglichen, ist es bekannt, den stationären Teil des Axiallagers auf einer Kugel zentral abzustützen. Auf der Kugel ist ein Schwenken in alle Richtungen möglich. Darüber hinaus kann die zentrale Kugel in axialer Richtung verstellt werden, um die Position des Axiallagers und damit die Lage der Rotorwelle exakt einstellen zu können. Zur Kraftübertragung von den Axiallagerflächen auf die genannte Kugel muss der stationäre Teil des Axiallagers ausreichend steif und damit auch groß dimensioniert werden.

WO98/32980 offenbart eine Drucklageranordnung für einen Tauchmotor, welcher mit der Motorwelle so verbunden ist, dass das Lager die auf die Motorwelle wirkenden Zugkräfte aufnimmt. Hierzu ist ein fester ringförmiger Lagerträger vorgesehen, welcher ein zentrales Loch aufweist, durch welches sich die Motorwelle hindurch erstreckt. An der dem Rotor des Motors abgewandten Seite weist der Lagerträger eine sphärisch gekrümmte Ringfläche auf, an welcher eine korrespondierend sphärisch gekrümmte Ringfläche eines Lagerringes zur Anlage kommt. An diesem Lagerring sind an der der sphärischen Ringfläche abgewandten Seite Lagerschuhe angeordnet, welche mit dem beweglichen Teil des Lagers in gleitendem Kontakt sind. Die Lagerschuhe sind als separate Bauteile in den Lagerring eingesetzt und dort gehalten. Dies bedeutet, dass diese Lageranordnung aus einer Vielzahl von Einzelteilen zusammengesetzt werden muss. Darüber hinaus besteht die Schwierigkeit, die einzelnen Lagerschuhe in paralleler Anlage mit der Gegenlagerfläche des beweglichen Lagerteils zu halten.

Es ist Aufgabe der Erfindung, einen Tauchmotor mit einem derartig verbesserten Axiallager bereitzustellen, bei welchem die Komponenten des Axiallagers schlanker, kompakter und mit weniger Materialeinsatz ausgebildet werden können und darüber hinaus die Montage des Axiallagers vereinfacht ist.

Diese Aufgabe wird durch einen Tauchmotor mit den in Anspruch 1 angegeben Merkmalen gelöst. Bevorzugte Ausführungsformen ergeben sich aus den Unteransprüchen, der nachfolgenden Beschreibung sowie den Figuren.

Der erfindungsgemäße Tauchmotor, d.h. ein elektrischer Tauchmotor ist zum Antrieb einer Tauchpumpe, insbesondere einer Zentrifugalpumpe vorgesehen. Der Tauchmotor weist in bekannter Weise einen Rotor mit ggf. einer Rotorwelle auf, welcher über ein Axiallager in dem Rotorgehäuse gelagert ist. Vorzugsweise ist das Axiallager dabei an der Rotorwelle angebracht, welche sich durch den eigentlichen Rotor des Elektromotors erstreckt. Das Axiallager besteht in bekannter Weise aus zwei Teilen, einem stationären Teil, welcher am Motorgehäuse festgelegt ist, und einem beweglichen Teil, welcher an dem Rotor bzw. der Rotorwelle fixiert ist.

Erfindungsgemäß ist der stationäre Teil des Axiallagers als stationärer Lagerring ausgebildet. Dieser Lagerring weist eine erste Axialseite auf, an welcher eine Axiallagerfläche gelegen ist. Diese Axiallagerfläche ist in Kontakt mit dem beweglichen Teil des Axiallagers. Die Axiallagerfläche besteht dabei vorzugsweise aus rostfreiem Stahl, während der bewegliche Teil des Axiallagers vorzugsweise aus Kohlenstoff bzw. Graphit gefertigt ist. Es ist zu verstehen, dass jedoch auch andere Materialpaarungen zum Einsatz kommen können.

Weiterhin weist der stationäre Lagerring eine zweite Axialseite auf, welche der ersten Axialseite entgegengesetzt ist. Diese Axialseite weist erfindungsgemäß eine sphärische Krümmung auf. D.h. die axialseitige Oberfläche des Lagerrings an dessen zweiten Axialseite hat die Form eines ringförmigen Ausschnittes einer Kugeloberfläche, die Form einer Kugelzone. Diese zweite Axialseite des Lagerringes liegt an einer korrespondierend sphärisch gekrümmten ringförmigen Anlagefläche eines Lagerträgers an. Die Anlagefläche des Lagerträgers ist derartig korrespondierend zu der Axialseite des Lagerringes gekrümmt, dass sie ebenfalls einen Ausschnitt einer Kugeloberfläche mit demselben Radius wie die Krümmung des Lagerringes aufweist. Die Anlagefläche hat ebenfalls die Form eines ringförmigen Ausschnittes aus einer Kugeloberfläche, d.h. die Form einer Kugelzone. Dadurch, dass die beiden ringförmigen Flächen, d.h. die zweite Axialseite des Lagerringes und die gekrümmte Anlagefläche des Lagerträgers dieselbe kugelförmige Krümmung aufweisen, können beide um den Kugelmittelpunkt der Krümmung zueinander verschwenken. Dies ermöglicht eine selbsttätige Ausrichtung des Lagerringes relativ zu dem beweglichen Teil des Lagers, welcher an dem Rotor angebracht ist.

Dadurch, dass die Anlagefläche des Lagerringes an dem Lagerträger ringförmig ausgebildet ist, ist es möglich, diesen Anlagebereich, in dem die Axialkraft von dem Lagerring auf den Lagerträger übertragen wird, radial nach außen zu verlegen, in den radialen Bereich, in dem auch die Axialkräfte auf den Lagerring wirken. So kann der Lagerring so ausgebildet werden, dass er im Wesentlichen nur eine axiale Druckkraft übertragen muss. So können die Kraftangriffspunkte der Axialkraft von dem beweglichen Teil des Axiallagers auf den Lagerring und von dem Lagerring auf den Lagerträger im Wesentlichen auf denselben Radius bezüglich der Drehachse des Rotors gelegt werden, sodass bei der Kraftübertragung auf den Lagerring im Wesentlichen keine Biegemomente wirken. So kann der Lagerring insgesamt schlanker und dünner mit geringerem Materialeinsatz ausgebildet werden.

Der Mittelpunkt der sphärischen Krümmung der zweiten Axialseite des Lagerringes und entsprechend der Mittelpunkt der sphärischen Krümmung der Anlagefläche des Lagerträgers sind vorzugsweise auf der Drehachse des Rotors gelegen. Auf diese Weise wird eine optimale Ausrichtung der Axiallagerfläche bezüglich der Drehachse des Rotors möglich.

Die Anlagefläche des Lagerträgers und die Axiallagerfläche des Lagerringes liegen vorzugsweise in einer Projektion entlang der Drehachse im Wesentlichen übereinander. D.h. vorzugsweise erstrecken sich die Axiallagerfläche des Lagerringes und die Anlagefläche des Lagerträgers in radialer Richtung im Bereich derselben radialen Abstände bezüglich der Drehachse des Rotors. So wird sichergestellt, dass die Kraftangriffspunkte bzw. kraftübertragenden Flächen von dem beweglichen Teil des Lagers auf den Lagerring einerseits und von dem Lagerring auf den Lagerträger andererseits in axialer Richtung parallel zur Drehachse des Rotors gesehen übereinander liegen. D.h. die Kraftübertragung von dem beweglichen Teil des Axiallagers bis zu dem Lagerträger erfolgt vorzugsweise entlang einer geraden Linie bzw. eines Zylinders parallel zur Drehachse mit konstantem radialem Abstand zu dieser Drehachse. So werden auf den Lagerring wirkenden Momente minimiert oder idealerweise vollständig vermieden.

Weiter ist es bevorzugt, dass der Rotor sich in axialer Richtung über die Axiallagerfläche und vorzugsweise die Anlagefläche an dem Lagerträger hinaus erstreckt. Dies wird ebenfalls dadurch möglich, dass die Anlagefläche des Lagerträgers, an welcher der Lagerring anliegt, ringförmig ausgebildet ist und somit der Zentralbereich frei bleibt. Durch diesen freibleibenden Zentralbereich kann sich die Rotorwelle hindurch erstrecken. Diese ermöglicht es, dass die Radiallagerung der Rotorwelle näher zum Ende der Rotorwelle bzw. des Rotors hin gelegen sein kann als die beschriebene Axiallagerung.

Weiter bevorzugt ist der Lagerträger hülsenförmig ausgebildet. Dabei ist die Anlagefläche für den Lagerring an einer Stirnseite der Hülse ausgeformt.

Gemäß einer weiteren bevorzugten Ausführungsform ist der Lagerträger in axialer Richtung parallel zur Drehachse des Rotors bewegbar. Dies ermöglicht es, die Position der Axiallageranordnung parallel zur Drehachse des Rotors zu verschieben und damit den Rotor bzw. die Rotorwelle in axialer Richtung zu positionieren. Dies kann wesentlich sein, um das freie Ende des Rotors bzw. der Rotorwelle, welches zur Kupplung mit einer Pumpe vorgesehen ist, in eine definierte axiale Position bezüglich des Motorgehäuses zu bringen. Zu der Bewegung des Lagerträgers können geeignete Einstellmittel, beispielsweise Einstellschrauben vorgesehen sein, mit welchen eine axiale Verlagerung des Lagerträgers möglich ist.

Besonders bevorzugt ist der Lagerträger mit einem Gewinde konzentrisch zur Drehachse des Rotors versehen, welches mit einem Gewinde an einem an dem Motorgehäuse festgelegtem Aufnahmestutzen in Eingriff ist. Dabei ist der Lagerträger vorzugsweise in der beschriebenen Weise hülsenförmig ausgebildet. Das Gewinde ist weiter bevorzugt am Innenumfang des Lagerträgers ausgebildet und der Aufnahmestutzen an dem Motorgehäuse weist vorzugsweise ein korrespondierendes Gewinde am Außenumfang auf. Es ist jedoch auch eine umgekehrte Ausgestaltung möglich, d.h. ein Gewinde am Außenumfang des Lagerträgers und am Innenumfang des Aufnahmestutzens. Durch Drehung des Lagerträgers auf dem Gewinde am Aufnahmestutzen ist eine axiale Bewegung des Lagerträgers parallel zur Drehachse des Rotors möglich, wodurch die Anlagefläche für den Lagerring in axialer Richtung positionierbar ist. Der Aufnahmestutzen ist vorzugsweise an einem Deckel bzw. Bodenstück ausgebildet, welches an einem axialen Ende eines rohrförmigen Teils des Motorgehäuses, welches das Statorgehäuse bildet, angebracht ist.

Weiter bevorzugt hat das Gewinde von der Drehachse des Rotors einen radialen Abstand, welcher im Wesentlichen im Bereich der radialen Erstreckung der ringförmigen Anlagefläche des Lagerträgers liegt, d.h. insbesondere größer als der Innendurchmesser und kleiner als der Außendurchmesser der ringförmigen Anlagefläche des Lagerträgers ist. Hierdurch wird erreicht, dass das Gewinde in axialer Projektion entlang der Drehachse des Rotors unter der Anlagefläche des Lagerträgers und der Axiallagerfläche des Lagerringes gelegen ist. So wird auch die Kraftübertragung vom Lagerträger auf den Aufnahmestutzen über das Gewinde entlang einer Achse bzw. zylindrischen Fläche erfolgen, welche im Wesentlichen in Verlängerung des Kraftvektors der Axialkraft von dem beweglichen Teil des Axiallagers auf die Axiallagerfläche und von dem Lagerring auf die Anlagefläche an dem Lagerträger verläuft. D.h. die gesamte Kraftübertragung von dem beweglichen Teil des Axiallagers auf den Bodenbereich des Motorgehäuses verläuft vorzugsweise entlang einer durchgehenden Achse bzw. Zylinderfläche parallel zur Drehachse des Rotors. Somit werden Biegemomente auf die kraftübertragenden Bauteile, insbesondere auch auf den Lagerträger weitgehend vermieden, sodass diese Bauteile schlank und mit geringem Materialeinsatz ausgebildet werden können.

Weiter ist bevorzugt, einen Sicherungsstift oder eine Sicherungsschraube vorzusehen, um den Lagerträger an dem Aufnahmestutzen gegen Verdrehung zu sichern. Dabei ist zu verstehen, dass alternativ auch andere Sicherungselemente zur Verdrehsicherung zum Einsatz kommen können. Diese Elemente zur Verdrehsicherung sind vorzugsweise lösbar, um zum Einstellen der axialen Position des Lagers den Lagerträger an dem Aufnahmestutzen verdrehen zu können.

Besonders bevorzugt sind in dem Aufnahmestutzen oder in dem sich an dem Aufnahmestutzen anschließenden Bodenstück bzw. Deckel des Motorgehäuses Öffnungen vorgesehen, in welche ein Sicherungsstift oder eine Sicherungsschraube eingesetzt werden kann. Im letzteren Fall sind in den Öffnungen vorzugsweise entsprechende Gewinde für die Sicherungsschraube ausgebildet. Der Sicherungsstift oder die Sicherungsschrauben erstrecken sich dabei bevorzugt parallel zur Drehachse des Rotors und greifen in geeigneter Weise zur Verdrehsicherung in den Lagerträger ein.

Gemäß einer weiteren bevorzugten Ausführungsform sind an dem Lagerträger über den Umfang verteilt Eingriffselemente zum Ansetzen eines Werkzeuges zum Drehen des Lagerträgers ausgebildet, wobei die Eingriffselemente weiter bevorzugt als im Querschnitt halbkreisförmige Taschen am Innenumfang des Lagerträgers ausgebildet sind. In diese Eingriffselemente bzw. vorzugsweise in diese Taschen kann beispielsweise mit einem Schraubendreher eingegriffen werden, um den Lagerträger auf dem Gewinde an dem Aufnahmestutzen zu verdrehen. Dabei wird das Werkzeug, beispielsweise der Schraubendreher, bevorzugt durch dieselben Öffnungen eingesetzt, in welche auch ein Sicherungsstift und/oder eine Sicherungsschraube zur Verdrehsicherung eingesetzt werden kann. Es kann jedoch auch zumindest eine zusätzliche Öffnung zum Durchführen eines Werkzeuges in dem Bodenstück ausgebildet sein.

Es ist besonders bevorzugt, dass der zumindest eine Sicherungsstift oder die zumindest eine Sicherungsschraube mit einem der Eingriffselemente im Eingriff ist, um den Lagerträger gegen Verdrehen zu sichern. Auf diese Weise wird eine Doppelfunktion der Eingriffselemente erreicht, zum einen können sie zur Verdrehsicherung verwendet werden, zum anderen eben zum Verdrehen mittels eines Werkzeugs.

Die im Querschnitt halbkreisförmigen Taschen haben vorzugsweise die Form eines Halbzylinders, welcher sich parallel zur Drehachse des Rotors erstreckt. Dabei sind bevorzugt so viele gleiche Taschen über den Umfang verteilt, dass die einzelnen Taschen direkt aneinander angrenzen, sodass sie gemeinsam im Wesentlichen die Form einer Innenverzahnung am Innenumfang des Lagerträgers bilden. Um einen Eingriff eines Werkzeugs und/oder eines Sicherungsstiftes bzw. einer Sicherungsschraube zwischen dem Innenumfang des Lageträgers und dem Außenumfang des Aufnahmestutzens zu ermöglichen, ist der Lagerträger vorzugsweise zu einem Axialende, nämlich dem Axialende, an dem die Eingriffselemente bzw. Taschen ausgebildet sind, innen in radialer Richtung erweitert, sodass ein Freiraum zwischen dem Innenumfang des Lagerträgers und dem Außenumfang des Lagerstutzen gebildet wird.

Gemäß einer weiteren bevorzugten Ausführungsform ist in dem Aufnahmestutzen ein Radiallager für den Rotor bzw. die Rotorwelle angeordnet. Diese kompakte Platz sparende Anordnung wird dadurch möglich, dass sich die Rotorwelle durch den Lagerträger hindurch über das Axiallager hinaus erstrecken kann.

An dem Lagerring sind erfindungsgemäß an der ersten Axialseite mehrere Lagerschuhe angebracht, welche gemeinsam die Axiallagerfläche bilden. Die Lagerschuhe sind in Form von Ringsektoren ausgebildet, wobei mehrere Lagerschuhe vorzugsweise gleichmäßig über den Umfang des Lagerringes verteilt sind. An den axialen Oberflächen der Lagerschuhe kommt der bewegliche Teil des Axiallagers, welcher mit dem Rotor verbunden ist, gleitend zur Anlage.

Die Lagerschuhe sind erfindungsgemäß von dem Lagerring axial beabstandet und mit dem Lagerring über Verbindungssäulen verbunden. Dies ermöglicht aufgrund elastischer Biegung der Säulen eine gewisse Beweglichkeit der einzelnen Lagerschuhe zueinander und bezüglich des Lagerringes. Dadurch kann eine optimale Ausrichtung der Lagerschuhe und damit der von diesen definierten Axiallagerflächen zu dem anliegenden beweglichen Teil des Axiallagers ermöglicht werden. Gemeinsam mit der sphärischen Anlagefläche wird somit eine im Wesentlichen selbsttätige Positionierung der Lagerflächen zueinander sichergestellt. Durch die Freiräume zwischen den einzelnen Lagerschuhen ist darüber hinaus eine gute Schmierung der Axiallagerfläche möglich.

Lagerschuhe und Lagerring sind vorzugsweise gemeinsam mit den sie verbindenden Verbindungssäulen einstückig ausgebildet. Diese Ausbildung kann beispielsweise aus rostfreiem Stahl im Feinguss erfolgen, wobei eine weitere Bearbeitung insbesondere der Anlageflächen erfolgen kann.

Auch der Lagerträger und der Aufnahmestutzen sind vorzugsweise aus rostfreiem Stahl ausgebildet. Dies bietet sich insbesondere dann an, wenn der Tauchmotor flüssigkeitsgefüllt ist, um Korrosion zu vermeiden.

Die Verbindungssäulen zwischen Lagerschuhen und Lagerring sind vorzugsweise in radialer Richtung bezüglich der Drehachse des Rotors jeweils zumindest teilweise zwischen dem Innenumfang und dem Außenumfang der Anlagefläche des Lagerträgers gelegen. Besonders bevorzugt sind die Verbindungssäulen im Wesentlichen vollständig im Bereich der radialen Erstreckung der Anlagefläche gelegen. Dabei erstrecken sich die Säulen vorzugsweise parallel zur Drehachse des Rotors. So wird eine durchgängige Kraftübertragung entlang einer Achse von der Axiallagerfläche auf den Lagerträger ermöglicht und im Lagerring treten im Wesentlichen keine Biegemomente auf.

Der Lagerring ist vorzugsweise gegenüber dem Lagerträger mit einer Verdrehsicherung versehen. Beispielsweise kann zumindest ein vorstehender Zapfen oder Vorsprung vorgesehen sein, welcher in eine entsprechende Ausnehmung des Lagerringes eingreift. Dabei weist dieser Eingriff vorzugsweise so viel Spiel auf, dass die erforderliche Beweglichkeit des Lagerringes auf dem Lagerträger entlang der sphärischen Anlagefläche gewährleistet bleibt.

Der Tauchmotor weist weiter bevorzugt in dem Axiallager einen beweglichen Lagerring auf, welcher mit der Axiallagerfläche des stationären Lagerringes in Kontakt ist und mit dem Rotor formschlüssig verbunden ist. Der bewegliche Lagerring bildet, wie oben beschrieben, den beweglichen Teil des Axiallagers. Durch den formschlüssigen Eingriff mit dem Rotor bzw. der Rotorwelle kann eine sichere Kraftübertragung auf den Lagerring und eine leichte Anbringung des Lagerringes an dem Rotor gewährleistet sein. Hierzu kann ein zusätzliches Befestigungselement vorgesehen sein, welches zunächst auf der Rotorwelle fixiert wird und Eingriffselemente aufweist, welche formschlüssig mit korrespondierenden Eingriffselementen an dem beweglichen Lagerring in Eingriff treten. Beispielsweise können an dem Befestigungselement sich axial erstreckende Zähne ausgebildet sein, welche in korrespondierende Ausnehmungen an dem Lagerring eingreifen.

Nachfolgend wird die Erfindung anhand der beigefügten Figuren beschrieben. In diesen zeigt:
- Fig. 1: eine Schnittansicht eines erfindungsgemäßen Tauchmo- tors,
- Fig. 2: eine Explosionsansicht der Axiallageranordnung des Tauchmotors gemäß Fig. 1,
- Fig.3: die Axiallageranordnung gemäß Fig. 2 im zusammenge- setzten Zustand,
- Fig. 4: eine Schnittansicht der Axiallageranordnung gemäß Fig. 2 und 3 im auseinandergenommenen Zustand und
- Fig. 5: eine Schnittansicht der Axiallageranordnung gemäß der Fig. 2 bis 4 im zusammengesetzten Zustand.

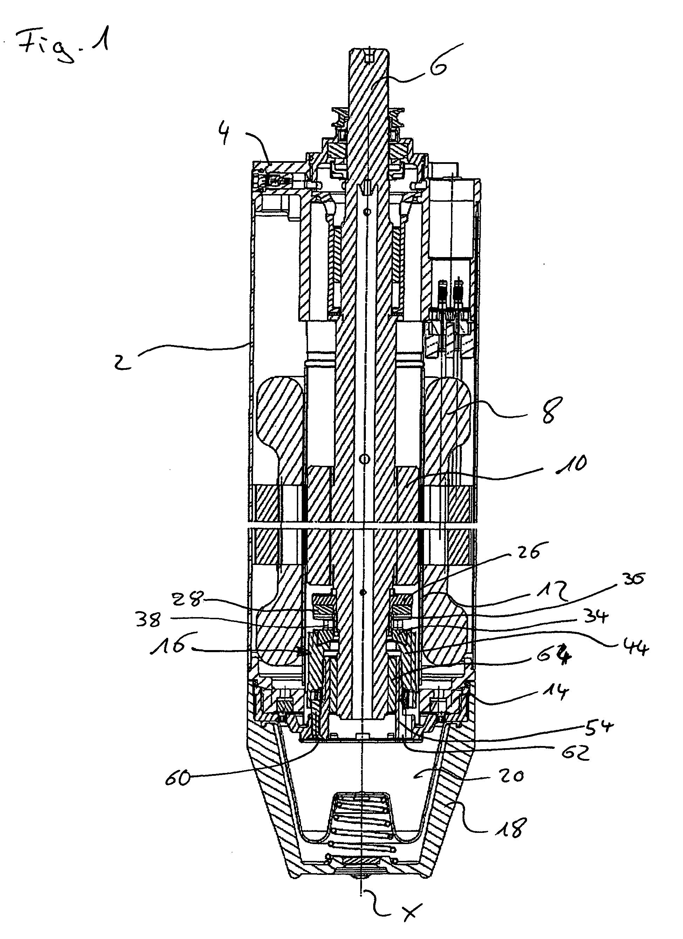

Der Tauchmotor, welcher in Fig. 1 in einer Gesamtansicht dargestellt ist, weist in bekannter Weise ein Stator- bzw. Motorgehäuse 2 auf, welches im Wesentlichen rohrförmig ausgebildet ist. An der ersten Stirnseite des Motorgehäuses 2 ist dieses durch einen Deckel 4 verschlossen, aus welchem zentral die Rotorwelle 6 austritt und dort zur Verbindung mit einer Tauchpumpe vorgesehen ist. Im Inneren des Motorgehäuses 2 ist der eigentliche elektrische Antriebsmotor angeordnet. Dieser weist einen Stator 8 und einen Rotor 10 auf, welcher im Inneren des Stators 8 um die Dreh- bzw. Längsachse X drehbar ist. Der Stator 8 liegt in einem ringförmigen trockenen Statorraum und wird nach innen von dem flüssigkeitsgefüllten Rotorraum durch ein Spaltrohr 12 getrennt. An dem dem Deckel 4 abgewandten Axialende ist das rohrförmige Motorgehäuse 2 durch ein Bodenstück 14 verschlossen, welches die Axiallageranordnung 16 trägt. In axialer Richtung schließt sich an das Bodenstück 14 eine Endkappe 18 an, welche ein Ausdehnungsgefäß 20 für die Flüssigkeitsfüllung des Rotorraumes enthält.

Die Axiallageranordnung 16 nimmt die im Betrieb auf die Rotorwelle 6 bzw. den Rotor 10 wirkenden Axialkräfte auf. Nachfolgend wird der Aufbau dieser Axiallageranordnung 16 näher beschrieben.

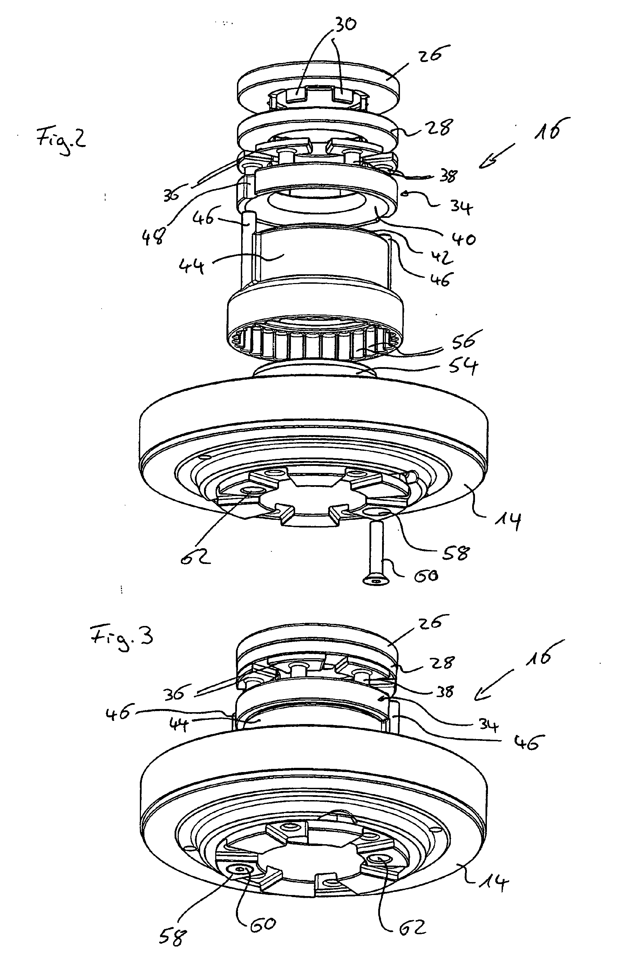

Die Axiallageranordnung 16 ist im Einzelnen in den Fig. 2 bis 5 gezeigt. Die Axiallageranordnung 16 besteht aus einem beweglichen Teil 22, welcher an der Rotorwelle 6 befestigt ist und sich gemeinsam mit der Rotorwelle 6 bzw. dem Rotor 10 dreht, sowie einem stationären Teil 24, welcher mit dem Motorgehäuse 2 verbunden ist. Der bewegliche Teil 2 wird von einem Trägerring 26 und einem Lagerring 28 gebildet. Der Trägerring 26, welcher vorzugsweise aus rostfreiem Stahl z. B. als Feingussteil gefertigt ist, ist drehfest an der Welle 6 festgelegt. Diese Befestigung des Trägerringes 26 an der Rotorwelle 6 kann kraft- und/oder formschlüssig erfolgen. Der Trägerring 26 weist am Innenumfang eine ringförmige Anordnung von sich axial, d.h. parallel zur Längsachse X erstreckenden Zähnen 30 auf, welche in korrespondierend geformte Ausnehmungen 32 in dem Lagerring 28 eingreifen. Auf dieser Weise wird der Lagerring 28 nur formschlüssig über den Trägerring 26 an der Rotorwelle 6 fixiert. Der Lagerring 28 ist vorzugsweise aus Graphit bzw. Kohlenstoff ausgebildet.

Der stationäre Teil 24 der Axiallageranordnung 16 weist einen Lagerring 34 auf. An dessen erster Axialseite, welche dem Lagerring 28 des beweglichen Teils 22 zugewandt ist, sind in einer ringförmigen Anordnung mehrere Lagerschuhe 36 angeordnet, welche mit ihren axialen Stirnflächen bzw. Axialflächen, welche dem Lagerring 28 zugewandt sind, die eigentliche Axiallagerfläche des Lagerringes 34 definieren. Die Lagerschuhe 36 sind jeweils über eine Verbindungssäule 38 einstückig mit dem Lagerring 34 verbunden. Die Verbindungssäulen 38 ermöglichen eine gewisse Beweglichkeit der Lagerschuhe 36 relativ zu dem Lagerring, sodass sie sich selbsttätig so ausrichten können, dass sie mit ihren axialen Stirnflächen plan an dem Lagerring 28 zur Anlage kommen. Lagerschuhe, Verbindungssäulen 38 und Lagerring 34 sind vorzugsweise einstückig aus rostfreiem Edelstahl im Feinguss gefertigt. An der den Lagerschuhen 36 abgewandten Axialseite weist der Lagerring 34 eine Anlagefläche 40 auf. Diese Anlagefläche 40 hat eine Ringform und ist sphärisch ausgebildet. D.h. die Anlagefläche 40 hat die Form einer Kugelzone bzw. eines ringförmigen Ausschnittes einer Kugeloberfläche.

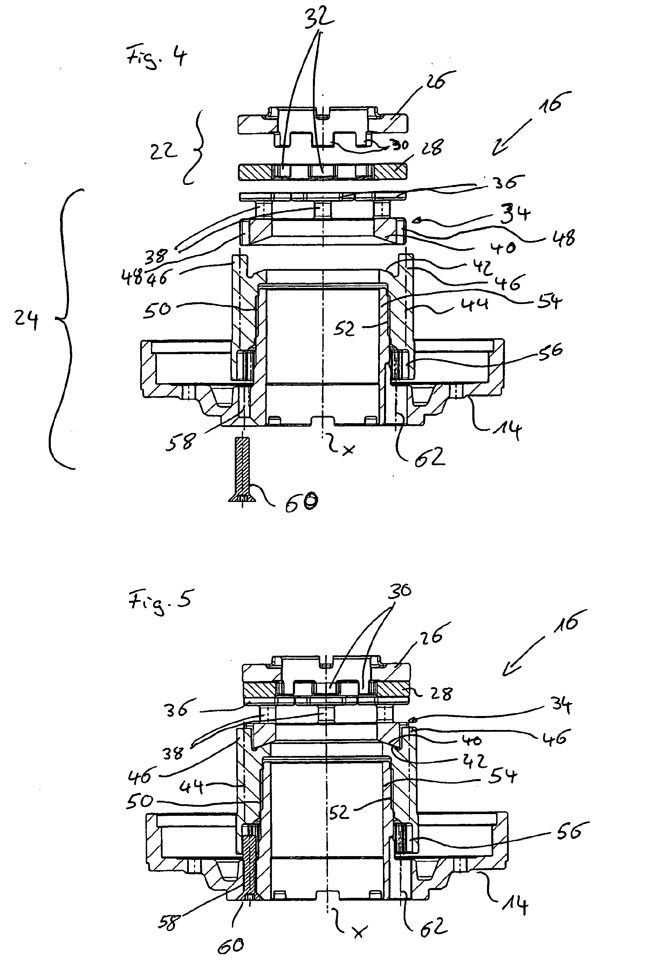

Wie in den Fig. 4 und 5 zu sehen ist, erstreckt sich die Anlagefläche 40 so, dass in axialer Projektion entlang der Längsachse X die Stirnflächen der Lagerschuhe 36 über der Anlagefläche 40 gelegen sind. Auch die Verbindungssäulen 38 sind in einem Bereich über der Anlagefläche 40 angeordnet, d.h. sie sind in radialer Richtung bezüglich der Drehachse X in einem Bereich zwischen dem Innenumfang und dem Außenumfang der Anlagefläche 40 gelegen. Auf diese Weise werden Axialkräfte, welche auf die Stirnfläche der Lagerschuhe 36 wirken, direkt in axialer Richtung, d.h. parallel zur Längsachse X auf die Anlagefläche 40 übertragen, ohne dass in dem Lagerring 34 unerwünschte Momente auftreten. Dies ermöglicht es, den Lagerring 34 insgesamt schlanker auszubilden.

Die Anlagefläche 40 des Lagerrings 34 kommt an einer Anlagefläche 42 eines Lagerträgers 44 zur Anlage. Der Lagerträger 44 ist hülsenförmig ausgebildet und erstreckt sich konzentrisch zur Dreh- bzw. Längsachse X. An einem Stirnende, demjenigen Stirnende, welches dem Bodenstück 14 ab- und dem Lagering 34 zugewandt ist, ist die ringförmige Anlagefläche 42 ausgebildet. Diese ist ebenfalls sphärisch geformt, d.h. bildet einen ringförmigen Ausschnitt einer Kugeloberfläche bzw. einer Kugelzone. Dabei ist die Krümmung korrespondierend zu der Krümmung der Anlagefläche 40. D.h. beide Flächen sind mit demselben Radius um einen gemeinsamen Mittelpunkt, welcher um eine Längsachse X gelegen ist, gekrümmt. Dies ermöglicht es, dass der Lagerring 34, wenn er mit seiner Anlagefläche 40 an der Anlagefläche 42 des Lagerträgers 44 anliegt, um ein gewisses Maß auf der Anlagefläche 42 verschwenken kann, sodass eine Winkelausrichtung bezüglich der Längsachse X möglich ist, um die Axialflächen der Lagerschuhe 36 in optimale flächige Anlage mit dem Lagerring 28 zu bringen. Die Anlagefläche 42 erstreckt sich dabei so, dass sie ebenfalls in axialer Projektion entlang der Längsachse X unter der Anlagefläche 40 des Lagerringes 34 gelegen ist. D.h. die radiale Ausdehnung der Anlagefläche 42 liegt im Bereich der radialen Ausdehnung der Anlagefläche 40. So wird eine durchgehende direkte Kraftübertragung entlang einer durchgehenden geraden Achse bzw. eines Zylinders parallel zur Längsachse X von dem Lagerschuhen 36 auf den Lagerträger 44 möglich.

Zur Verdrehsicherung des Lagerringes 34 an dem Lagerträger 44 weist der Lagerträger 44 an zwei diametral entgegengesetzten Seiten in axialer Richtung vorstehende Stifte 46 auf, welche in halbzylindrische Ausnehmungen 48 am Außenumfang des Lagerringes 34 eingreifen. Dabei ist zwischen den Vorsprüngen 46 und den Ausnehmungen 48 ein derartiges Spiel vorgesehen, dass die gewünschte Beweglichkeit des Lagerringes 34 auf der Anlagefläche 42 gewährleistet bleibt. Die Vorsprünge 36 sind einstückig mit dem Lagerträger 44 vorzugsweise aus rostfreiem Edelstahl im Feinguss ausgebildet.

Der hülsenförmige Lagerträger 44 weist an seinem Innenumfang ein Innengewinde 50 auf, welches mit einem Außengewinde 52 am Außenumfang eines Aufnahmestutzens 54 in Eingriff ist. Der Aufnahmestutzen 54 ist einstückig mit dem Bodenstück 14 ausgebildet und erstreckt sich ausgehend von diesem in axialer Richtung parallel und konzentrisch zur Drehachse X in das Innere des Motorgehäuses 2. Das Innengewinde 50 und das Außengewinde 52 erstrecken sich ebenfalls konzentrisch zur Längsachse X. Durch Drehung des Lagerträgers 44 auf dem Aufnahmestutzen 54 wird der Lagerträger 44 aufgrund des Gewindeeingriffes zwischen Innengewinde 50 und Außengewinde 52 in axialer Richtung bewegt. Auf diese Weise kann das gesamte Axiallager parallel zur Längsachse X axial verstellt werden, womit auch die Rotorwelle 6 in axialer Richtung verlagert werden kann, um die Länge, um welche die Rotorwelle 6 über den Deckel 4 nach außen vorsteht, auf ein definiertes Maß einstellen zu können.

Das Innengewinde 50 und das Außengewinde 52 liegen auf einem Radius bezüglich der Längsachse X, welcher zwischen dem Innenumfang und dem Außenumfang der Anlagefläche 40 des Lagerringes 34 gelegen ist. D.h. in axialer Projektion liegt der Gewindeeingriff zwischen Innengewinde 50 und Außengewinde 52 unter den Anlageflächen 40 und 42. Dies ermöglicht eine direkte geradlinige Kraftübertragung von der Anlagefläche 42 über den Lagerträger 44 auf den Aufnahmestutzen 54, wodurch unerwünschte Momente in dem Lagerträger 44 vermieden werden. Dies ermöglicht eine schlanke Ausgestaltung des Lagerträgers 44 mit geringer Wandstärke.

An seinem der Anlagefläche 42 abgewandten Axialende weist der Lagerträger 44 an seinem Innenumfang eine ringförmige Anordnung von Taschen 56 auf. Die Taschen 56 sind halbzylinderförmig ausgebildet und erstrecken sich jeweils parallel zur Längsachse X. Dabei liegen die einzelnen Taschen direkt aneinander an und sind ringförmig nach Art einer Innenverzahnung angeordnet. Im Bereich der ringförmigen Anordnung der Taschen 46 ist der Innendurchmesser der Lagerträgers 44 erweitert, sodass ein ringförmiger Freiraum zu der Außenumfangsfläche des Aufnahmestutzens 54 gegeben ist.

Axial fluchtend mit dem Durchmesser bezüglich der Längsachse X, auf welchem die Mittelachsen der Taschen 56 gelegen sind, ist in dem Bodenstück 14 ein Durchgangsloch 58 ausgebildet. Das Durchgangsloch 58 ist mit einem Gewinde versehen und dient der Aufnahme einer Sicherungsschraube 60. Die Sicherungsschraube 60 wird von der dem Ausdehnungsgefäß 20 zugewandten Seite des Bodenstückes 14 her in das Durchgangsloch 18 eingeschraubt und erstreckt sich durch das Bodenstück 14 hindurch in den Freiraum zwischen dem Innenumfang des Lagerträgers 44 und dem Außenumfang des Aufnahmestutzens 54, wobei sie in eine der Taschen 56 eingreift und so den Lagerträger 44 gegen Verdrehung auf dem Aufnahmestutzen 54 sichert.

Auf demselben Durchmesserkreis wie das Durchgangsloch 58 ist bezüglich der Längsachse X in dem Bodenstück 14 ein weiteres Durchgangsloch 62 ausgebildet. Dies hat einen größeren Durchmesser als das Durchgangsloch 58 und ist dafür vorgesehen, durch das Durchgangsloch 52 ein Werkzeug einzuführen, welches mit den Taschen 56 in Eingriff treten kann und in dem Durchgangsloch 62 so bewegt werden kann, dass mittels des Werkzeuges der Lagerträger 44 auf dem Aufnahmestutzen 54 verdreht werden kann, wenn die Sicherungsschraube 60 entnommen ist. Das hierfür verwendete Werkzeug kann beispielsweise ein Schraubendreher sein.

Wie in Fig. 1 zu erkennen ist, erstreckt sich die Rotorwelle 6 in axialer Richtung durch die Axiallageranordnung 16 hindurch, insbesondere über die Anlageflächen 40 und 42 hinaus in den Aufnahmestutzen 54 hinein. In dem Aufnahmestutzen 54 ist ein Radiallager 64 für die Rotorwelle 6 angeordnet. Diese Anordnung wird durch die erfindungsgemäße ringförmige Ausgestaltung von Lagerträger 44 und Lagerring 34 mit entsprechend sphärischen und ringförmigen Anlageflächen 40 und 42 möglich, da durch diese Ausgestaltung ein zentraler Freiraum geschaffen wird, durch welchen sich die Rotorwelle 6 erstrecken kann.

### Bezugszeichenliste

- 2 -: Motorgehäuse
- 4 -: Deckel
- 6 -: Rotorwelle
- 8 -: Stator
- 10 -: Rotor
- 12 -: Spaltrohr
- 14 -: Bodenstück
- 16 -: Axiallageranordnung
- 18 -: Endkappe
- 20 -: Ausdehnungsgefäß
- 22 -: beweglicher Teil
- 24 -: stationärer Teil
- 26 -: Trägerring
- 28 -: Lagerring
- 30 -: Zähne
- 32 -: Ausnehmung
- 34 -: Lagerring
- 36 -: Lagerschuhe
- 38 -: Verbindungssäulen
- 40, 42 -: Anlageflächen
- 44 -: Lagerträger
- 46 -: Vorsprünge
- 48 -: Ausnehmungen
- 50 -: Innengewinde
- 52 -: Außengewinde
- 54 -: Aufnahmestutzen
- 56 -: Taschen
- 58 -: Durchgangsloch
- 60 -: Sicherungsschraube
- 62 -: Durchgangsloch
- 64 -: Radiallager
- X -: Längs- bzw. Drehachse

## Patentansprüche

1. Tauchmotor zum Antrieb einer Tauchpumpe mit einem Rotor (6, 10), welcher über ein Axiallager (16) in dem Motorgehäuse (2) gelagert ist, wobei
das Axiallager (16) einen stationären Lagerring (34) aufweist, an dessen erster Axialseite eine Axiallagerfläche gelegen ist und dessen entgegengesetzte zweite Axialseite (40) eine sphärische Krümmung aufweist, wobei die zweite Axialseite des Lagerrings (34) an einer korrespondierend sphärisch gekrümmten ringförmigen Anlagefläche (42) eines Lagerträgers (44) anliegt, wobei an dem Lagerring (34) an der ersten Axialseite mehrere Lagerschuhe (36) angebracht sind, welche die Axiallagerfläche bilden, **dadurch gekennzeichnet, daß** die Lagerschube (36) von dem Lagerring (34) axial beabstandet sind und mit dem Lagerring (34) über Verbindungssäulen (38) verbunden sind.

2. Tauchmotor nach Anspruch 1, **dadurch gekennzeichnet, dass** der Mittelpunkt der sphärischen Krümmung der zweiten Axialseite (40) auf der Drehachse (X) des Rotors (6, 10) gelegen ist.

3. Tauchmotor nach Anspruch 1 oder 2, **dadurch gekennzeichnet, dass** die Anlagefläche (42) des Lagerträgers (44) und die Axiallagerfläche des Lagerrings (34) in einer Projektion entlang der Drehachse (X) des Rotors (6, 10) übereinander liegen.

4. Tauchmotor nach einem der vorangehenden Ansprüche, **dadurch gekennzeichnet, dass** der Rotor (6, 10) sich in axialer Richtung (X) über die Axiallagerfläche und vorzugsweise die Anlagefläche (42) an dem Lagerträger (44) hinaus erstreckt.

5. Tauchmotor nach einem der vorangehenden Ansprüche, **dadurch gekennzeichnet, dass** der Lagerträger (44) hülsenförmig ausgebildet ist.

6. Tauchmotor nach einem der vorangehenden Ansprüche, **dadurch gekennzeichnet, dass** der Lagerträger (44) in axialer Richtung parallel zu der Drehachse (X) des Rotors (6, 10) bewegbar ist.

7. Tauchmotor nach einem der vorangehenden Ansprüche, **dadurch gekennzeichnet, dass** der Lagerträger (44) mit einem Gewinde (50) konzentrisch zur Drehachse (X) des Rotors (6, 10) versehen ist, welches mit einem Gewinde (52) an einem an dem Motorgehäuse (2) festgelegten Aufnahmestutzen (54) in Eingriff ist.

8. Tauchmotor nach Anspruch 7, **dadurch gekennzeichnet, dass** das Gewinde (50, 52) von der Drehachse (X) des Rotors (6, 10) einen radialen Abstand hat; welcher im Wesentlichen im Bereich der radialen Erstreckung der ringförmigen Anlagefläche (42) des Lagerträgers (44) gelegen ist.

9. Tauchmotor nach Anspruch 7 oder 8, **dadurch gekennzeichnet, dass** zumindest ein Sicherungsstift oder eine Sicherungsschraube (60) vorgesehen ist, um den Lagerträger (44) an dem Aufnahmestutzen (54) gegen Verdrehen zu sichern.

10. Tauchmotor nach einem der Ansprüche 7 bis 9, **dadurch gekennzeichnet, dass** an dem Lagerträger (44) über den Umfang verteilt Eingriffselemente (56) zum Ansetzen eines Werkzeuges zum Drehen des Lagerträgers (44) ausgebildet sind.

11. Tauchmotor nach Anspruch 10, **dadurch gekennzeichnet, dass** die Eingriffselemente (56) als im Querschnitt halbkreisförmige Taschen am Innenumfang des Lagerträgers (44) ausgebildet sind.

12. Tauchmotor nach einem der Ansprüche 9 bis 11, **dadurch gekennzeichnet, dass** der zumindest eine Sicherungsstift oder die zumindest eine Sicherungsschraube (60) mit einem der Eingriffselemente (56) in Eingriff ist, um den Lagerträger (44) gegen Verdrehen zu sichern.

13. Tauchmotor nach einem der Ansprüche 7 bis 12, **dadurch gekennzeichnet, dass** in dem Aufnahmestutzen (54) ein Radiallager (64) für den Rotor (6, 10) angeordnet ist.

14. Tauchmotor nach einem der vorangehenden Ansprüche, **dadurch gekennzeichnet, dass** die Verbindungssäulen (38) in radialer Richtung bezüglich der Drehachse (X) des Rotors (6, 10) jeweils zumindest teilweise zwischen dem Innenumfang und dem Außenumfang der Anlagefläche (42) des Lagerträgers (44) gelegen sind.

15. Tauchmotor nach einem der vorangehenden Ansprüche, **dadurch gekennzeichnet, dass** das Axiallager (16) einen beweglichen Lagerring (28) aufweist, welcher mit der Axiallagerfläche des stationären Lagerings (34) in Kontakt ist und mit dem Rotor (6, 10) formschlüssig verbunden ist.

## Claims

1. A submersible motor for the drive of a submersible pump with a rotor (6, 10) which is mounted in the motor housing (2) via a thrust bearing (16),
wherein
the thrust bearing (16) comprises a stationary bearing ring (34), on whose first axial side a thrust bearing surface is situated and whose opposite second axial side (40) has a spherical curvature, wherein the second axial side of the bearing ring (34) bears on a correspondingly spherically curved, annular abutment surface (42) of a bearing carrier (44), wherein several bearing pads (36) are attached on the bearing ring (34) on the first axial side, and form the thrust bearing surface, **characterised in that** the bearing pads (36) are axially distanced to the bearing ring (34) and are connected to the bearing ring (34) via connection columns (38).

2. A submersible motor according to claim 1, **characterised in that** the middle point of the spherical curvature of the second axial side (40) is situated on the rotation axis (X) of the rotor (6, 10).

3. A submersible motor according to claim 1 or 2, **characterised in that** the abutment surface (42) of the bearing carrier (44) and the thrust bearing surface of the bearing ring (34) lie above one another in a projection along the rotation axis (X) of the rotor (6, 10).

4. A submersible motor according to one of the preceding claims, **characterised in that** the rotor (6, 10) extends in the axial direction (X) beyond the thrust bearing surface and preferably the abutment surface (42) on the bearing carrier (44).

5. A submersible motor according to one of the preceding claims, **characterised in that** the bearing carrier (44) is designed in a sleeve-like manner.

6. A submersible motor according to one of the preceding claims, **characterised in that** the bearing carrier (44) is movable in the axial direction parallel to the rotation axis (X) of the rotor (6, 10).

7. A submersible motor according to one of the preceding claims, **characterised in that** the bearing carrier (44) is provided with a thread (50) concentrically to the rotation axis (X) of the rotor (6, 10), which is in engagement with a thread (52) on a receiver nozzle (54) fixed on the motor housing (2).

8. A submersible motor according to claim 7, **characterised in that** the thread (50, 52) has a radial distance to the rotation axis (X) of the rotor (6, 10), which is situated essentially in the region of the radial extension of the annular abutment surface (42) of the bearing carrier (44).

9. A submersible motor according to claim 7 or 8, **characterised in that** at least one securing pin or a securing screw (60) is provided, in order to secure the bearing carrier (44) on the receiver nozzle (54) against rotation.

10. A submersible motor according to one of the claims 7 to 9, **characterised in that** engagement elements (56) for applying a tool for rotating the bearing carrier (44) are formed on the bearing carrier (44), distributed over the periphery

11. A submersible motor according to claim 10, **characterised in that** the engagement elements (56) are preferably designed as pockets semicircular in cross section, on the inner periphery of the bearing carrier (44).

12. A submersible motor according to claim 9 and 11, **characterised in that** the at least one securing pin or the at least one securing screw (60) is in engagement with one of the engagement elements (56), in order to secure the bearing carrier (44) against a rotation.

13. A submersible motor according to one of the claims 7 to 12, **characterised in that** a radial bearing (64) for the rotor (6, 10) is arranged in the receiver nozzle (54).

14. A submersible motor according to one of the preceding claims, **characterised in that** the connection columns (38) are situated in the radial direction with respect to the rotation axis (X) of the rotor (6, 10), in each case at least partly between the inner periphery and the outer periphery of the abutment surface (42) of the bearing carrier (44).

15. A submersible motor according to one of the preceding claims, **characterised in that** the thrust bearing (16) comprises a moving bearing ring (28) which is in contact with the thrust bearing surface of the stationary bearing ring (34) and is connected to the rotor (6, 10) with a positive fit.

## Revendications

1. Moteur submersible pour l'entraînement d'une pompe submersible équipée d'un rotor (6, 10) logé dans le carter de moteur (2) par l'intermédiaire d'un palier axial (16),
dans lequel
le palier axial (16) présente une bague de palier (34) fixe, dont le premier côté axial présente une surface de palier axial et dont le second côté axial (40) opposé présente une courbure sphérique, le second côté axial de la bague de palier (34) venant en appui contre une surface d'appui (42) annulaire à courbure sphérique correspondante d'un support de palier (44), et sur le premier côté axial de la bague de palier (34) sont disposés plusieurs coussinets de palier (36) qui forment la surface de palier axial,
**caractérisé en ce que** les coussinets de palier (36) sont espacés axialement de la bague de palier (34) et sont reliés à la bague de palier (34) par l'intermédiaire de colonnes de liaison (38).

2. Moteur submersible selon la revendication 1, **caractérisé en ce que** le centre de la courbure sphérique du second côté axial (40) est situé sur l'axe de rotation (X) du rotor (6, 10).

3. Moteur submersible selon la revendication 1 ou 2, **caractérisé en ce que** la surface d'appui (42) du support de palier (44) et la surface de palier axial de la bague de palier (34) sont superposées selon une projection le long de l'axe de rotation (X) du rotor (6, 10).

4. Moteur submersible selon l'une des revendications précédentes, **caractérisé en ce que** le rotor (6, 10) s'étend en direction axiale (X) au-delà de la surface du palier axial et, de préférence, au-delà de la surface d'appui (42) contre le support de palier (44).

5. Moteur submersible selon l'une des revendications précédentes, **caractérisé en ce que** le support de palier (44) est réalisé sous forme de manchon.

6. Moteur submersible selon l'une des revendications précédentes, **caractérisé en ce que** le support de palier (44) est déplaçable en direction axiale parallèlement à l'axe de rotation (X) du rotor (6, 10).

7. Moteur submersible selon l'une des revendications précédentes, **caractérisé en ce que** le support de palier (44) est pourvu d'un filetage (50) concentrique à l'axe de rotation (X) du rotor (6, 10) et qui est en prise avec un filetage (52) prévu sur une tubulure de réception (54) fixée sur le carter de moteur (2).

8. Moteur submersible selon la revendication 7, **caractérisé en ce que** le filetage (50, 52) est situé à une distance radiale par rapport à l'axe de rotation (X) du rotor (6, 10), laquelle couvre sensiblement la région de l'étendue radiale de la surface d'appui (42) annulaire du support de palier (44).

9. Moteur submersible selon la revendication 7 ou 8, **caractérisé en ce qu'**est prévu au moins une goupille de sécurité ou une vis de blocage (60) pour immobiliser en rotation le support de palier (44) sur la tubulure de réception (54).

10. Moteur submersible selon l'une des revendications 7 à 9, **caractérisé en ce que** sont répartis sur le pourtour du support de palier (44) des éléments de prise (56) destinés à mettre en place un outil pour faire tourner le support de palier (44).

11. Moteur submersible selon la revendication 10, **caractérisé en ce que** les éléments de prise (56) sont réalisés sous forme de poches de section transversale semi-circulaire sur le pourtour intérieur du support de palier (44).

12. Moteur submersible selon l'une des revendications 9 à 11, **caractérisé en ce que** la goupille de sécurité, au moins au nombre de une, ou la vis de blocage (60), au moins au nombre de une, est en prise avec l'un des éléments de prise (56) pour immobiliser en rotation le support de palier (44).

13. Moteur submersible selon l'une des revendications 7 à 12, **caractérisé en ce qu'**est disposé dans la tubulure de réception (54) un palier radial (64) pour le rotor (6, 10).

14. Moteur submersible selon l'une des revendications précédentes, **caractérisé en ce que** les colonnes de liaison (38) sont situées chacune, au moins en partie, entre le pourtour intérieur et le pourtour extérieur de la surface d'appui (42) du support de palier (44) dans la direction radiale par rapport à l'axe de rotation (X) du rotor (6, 10).

15. Moteur submersible selon l'une des revendications précédentes, **caractérisé en ce que** le palier axial (16) présente une bague de palier (28) mobile qui est en contact avec la surface de palier axial de la bague de palier (34) fixe et est reliée au rotor (6, 10) par complémentarité de forme.
